(19) Europäisches Patentamt
European Patent Office
Office européen des brevets

(11) **EP 2 640 116 B1**

(12) **EUROPEAN PATENT SPECIFICATION**

(45) Date of publication and mention
of the grant of the patent:
**06.11.2019 Bulletin 2019/45**

(21) Application number: **12832886.1**

(22) Date of filing: **24.09.2012**

(51) Int Cl.:
*H04W 24/10* (2009.01)          *G01S 5/02* (2010.01)
*H04W 64/00* (2009.01)          *H04W 16/18* (2009.01)

(86) International application number:
**PCT/CN2012/081808**

(87) International publication number:
**WO 2013/041056 (28.03.2013 Gazette 2013/13)**

(54) **CALIBRATION METHOD AND DEVICE FOR COVERAGE DATABASE**

KALIBRIERVERFAHREN UND -VORRICHTUNG FÜR EINE ABDECKUNGSDATENBANK

PROCÉDÉ ET DISPOSITIF D'ÉTALONNAGE POUR UNE BASE DE DONNÉES DE COUVERTURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.09.2011 CN 201110283500**

(43) Date of publication of application:
**18.09.2013 Bulletin 2013/38**

(73) Proprietor: **Huawei Technologies Co., Ltd.
Longgang District
Shenzhen, Guangdong 518129 (CN)**

(72) Inventor: **BAO, Yi
Shenzhen, Guangdong 518129 (CN)**

(74) Representative: **Körber, Martin Hans
Mitscherlich PartmbB
Patent- und Rechtsanwälte
Sonnenstrasse 33
80331 München (DE)**

(56) References cited:
**EP-A2- 1 359 714          WO-A2-02/15417
CN-A- 1 870 816          CN-A- 101 877 871
CN-A- 102 333 339          GB-A- 2 405 292
US-A1- 2010 309 051          US-A1- 2011 165 892
US-A1- 2011 176 523**

## Description

## FIELD OF TECHNOLOGY

The present invention relates to communication technology field, and particularly to method and apparatus for calibrating coverage database.

## BACKGROUND

Some positioning methods emerge to enable some applications at network-side devices in the cellular wireless communication system (e.g. GSM, UMTS). The examples of such applications include traffic distribution, user action analysis, coverage analysis, problems locating and so on. One of these positioning methods is Measurement Report (MR)-based positioning method.

US 2011176523 (A1) describes methods and systems for managing a location database of a network-based positioning system. A server computer can receive location information from location-aware mobile devices (e.g., GPS-enabled devices) located within a communication range of access points of a wireless communications network. The server computer can calculate average geographic locations using the received locations for each access point. Based on the average geographic locations, the server computer can assign the access points to cells of a geographic grid. The server computer can filter the access points in each cell based on popularity, stability, longevity, and freshness of the access point and the received data. When a second mobile device connects to an access point in a cell, the server computer can transmit locations of the access points in the cell and in neighboring cells to the second mobile device such that a location of the second mobile device can be estimated. The server computer can store identifiers of the access points in association with the average geographic locations in a location database.

US 2010309051 (A1) describes a method and system for determining the position of a mobile device. Scanning devices may be used to characterize radio signals received at a number of locations within a geographical area of interest. The signal characteristics along with the location information associated with the characteristics are stored in a centralized reference database. A mobile device characterizes signals it receives at a certain location and compares the characteristics with the signal characteristics stored in the reference database to obtain accurate location information of the certain location.

GB2405292 (A) describes a wireless location gateway and applications therefore, and specifically discloses a location system for commercial wireless telecommunication infrastructures. The system is an end-to-end solution having one or more centers for outputting requested locations of commercially available handsets or mobile stations (MS) based on, e.g. CDMA, AMPS, NAMPS or TDMA communication standards, for processing both local MS location requests and more global MS location requests via, e.g., Internet communication between a distributed network of location centers. The system uses a plurality of MS locating technologies including those based on: (1) two-way TOA and TDOA; (2) pattern recognition; (3) distributed antenna provisioning; (5) GPS signals, (6) angle of arrival, (7) super resolution enhancements, and (8) supplemental information from various types of very low cost non-infrastructure base stations for communicating via a typical commercial wireless base station infrastructure or a public telephone switching network. Accordingly, the traditional MS location difficulties, such as multipath, poor location accuracy and poor coverage are alleviated via such technologies in combination with strategies for: (a) automatically adapting and calibrating system performance according to environmental and geographical changes; (b) automatically capturing location signal data for continual enhancement of a self-maintaining historical data base retaining predictive location signal data; (c) evaluating MS locations according to both heuristics and constraints related to, e.g., terrain, MS velocity and MS path extrapolation from tracking and (d) adjusting likely MS locations adaptively and statistically so that the system becomes progressively more comprehensive and accurate.;

Further, the system can be modularly configured for use in locating signaling environments ranging from urban, dense urban, suburban, rural, mountain to low traffic or isolated roadways. Accordingly, the system is useful for 911 emergency calls, tracking, routing, people and animal location including applications for confinement to and exclusion from certain areas.

US 2011/165892 A1 discloses a method and apparatus for providing geo-location enablement for a wireless device. In the exemplary process embodiment, a geo-location request is sent to the wireless device via the communication network. The geo-location request may include a request for the geo-location coordinate and corresponding wireless coverage area coordinates and signal strength values. Geo-location information is received from a plurality of wireless devices within the plurality of wireless networks via the communication network. The geo-location information includes geo-location data, network location data, and signal strength data. The geo-location data include a plurality of geo-location coordinates. The network location data comprises a plurality of network coordinates. The signal strength data include a plurality of signal strength values corresponding to the plurality of network coordinate.

WO 02/15417 A2 discloses systems and methods for determining signal coverage. The method includes receiving signal strength information for a signal; receiving location information representing a geographic location for one or more first locations; determining one or more local means based on the received signal strength information; estimating one or more second locations for the one or more local means based on the one or more first locations; transforming the one or more second locations into a route; and calculating the signal coverage for the route based on a signal coverage for at least one of the one or more second locations.

EP 1 359 714 A2 discloses a method and system for determining the location of a mobile computer.

In a cellular network, a terminal can generally receive signals from a plurality of neighboring cells as well as the main serving cell at a point. A basic assumption for the MR-based method is that a combination of signal strengths of signals received from respective cells at each point is unique. Thus, the position of each point within a network coverage area and signal strengths of signals received from respective cells at each point can be used to construct a database, i.e. a coverage database. The terminal may report the MRs during calling, wherein signal strengths received from respective cells by the terminal are recorded in the MRs. In this way, the position, at which a call is performed, may be retrieved from the database using the signal strengths recorded in the MR reported from the terminal.

The positioning precision of the MR-based positioning method depends on the accuracy of the coverage database, in which geographical longitude and latitude for each point in the network coverage area and the signal strengths of signals received from different cells at each point are recorded.

In order to improve the accuracy of the coverage database and the positioning precision, the drive test calibration is one of technical solutions in the prior art. The drive test refers to a test implemented on roads using testing vehicles. During testing, the drive test generally uses devices with Global Position System (GPS) to record longitude and latitude for each tested point, while using testing terminal to record the signal strengths of signals received from respective cells at each point. These data will be stored automatically by the devices. These measured longitudes and latitudes and signal strength information may be considered accurate. The drive test calibration is to use these "accurate" data to calibrate low-accurate data in the coverage database.

During developing the present invention, the inventor finds that: the drive test calibration is performed on the roads using vehicles, which means that the data used for calibration is collected along the roads and thus the calibrated data is uneven geographically. After the drive test calibration, the positioning precision is relatively poor when the MR-based positioning method is used to perform positioning within areas beyond the roads.

In addition, the time required to accomplish the drive test for one city is one or more weeks in practice. The test requires vehicles and professionals, which lead to high cost. Furthermore, if there are adjustments in engineering or radio frequency (RF) parameters, the calibration of the coverage database need be performed again. That is, calibration for the drive test will be a regular work. Therefore, calibration solutions for the drive test are time-consuming, high cost, and thus are disadvantageous for popularization and application of the positioning technology.

## SUMMARY

The brief description for accompanying drawings used in examples is provided for the purpose of illustrating technical solutions in the examples of the present invention. It is obvious for those skilled in the art that these accompanying drawings only serve as some examples of the present invention and other drawings may be derived easily from these accompanying drawings.

Examples of the present invention provide a method and an apparatus for calibrating a coverage database for improving the positioning precision, reducing time and cost spent on the calibration, and thus facilitating popularization and application of the positioning technology. The present invention is defined in the independent claims. Preferred embodiments are defined in the dependent claims.

It can be seen from the above technical solutions that the examples of the present invention have the following advantages: instructing the terminal supporting GPS to include geographical position information for current positions of the terminals in the measurement report to be reported by transmitting the measurement control message to the terminal in the network coverage area; and storing the signal strengths of signals received from respective cells by the terminal and the geographical position information for the terminal into the coverage database. Then the calibration of the coverage database may be done. Compared with the drive test calibration, there is no need for the vehicles and professionals, the calibration data is not merely collected on the roads, and the speed of calibration of the coverage database is improved with a lower cost, and the precision of calibration data in off-road areas is also improved. Thus the positioning precision is improved, the time and cost spent on the calibration are reduced, facilitating popularization and application of the positioning technology.

## BRIEF DESCRIPTION OF THE DRAWINGS

**Figure 1** is a flow diagram of a method according to an embodiment of the present invention;
**Figure 2** is a flow diagram of a method according to another embodiment of the present invention;
**Figure 3** is a diagram illustrating calculating the calibration of the coverage database according to an embodiment of the present invention;
**Figure 4** is a diagram illustrating configuration of an apparatus according to an embodiment of the present invention;
**Figure 5** is a diagram illustrating configuration of an apparatus according to another embodiment of the present invention;

**Figure 6** is a diagram illustrating configuration of an apparatus according to another embodiment of the present invention;

**Figure 7** is a diagram illustrating configuration of an apparatus according to another embodiment of the present invention; and

**Figure 8** is a flow diagram of a method according to another embodiment of the present invention.

DETAILED DESCRIPTION

The following presents a more detailed description for the invention, associated with the accompanying drawings, to make the objects, technical solutions and the advantages of the present invention more apparent. It is obvious that the embodiments described herein only are a part, not all, of embodiments of the present invention. Any other embodiments derived by those skilled in the art from the embodiments described herein without inventive works will fall into the protection scope of the present invention.

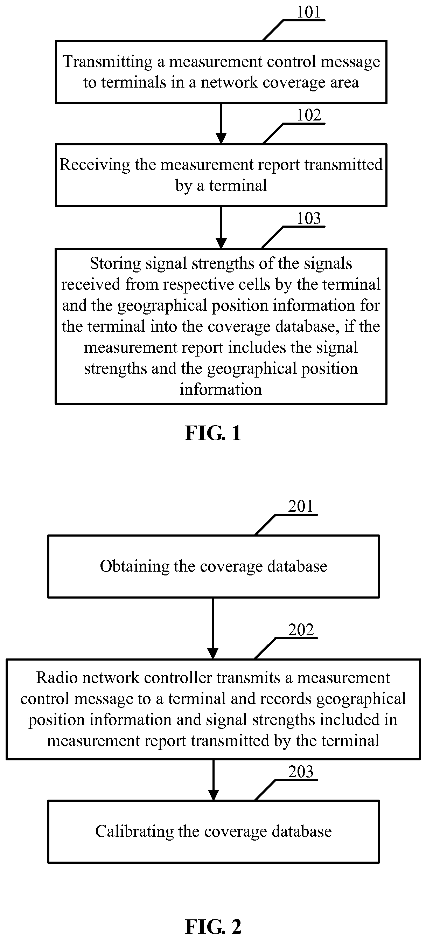

As shown in figure 1, an embodiment of the present invention provides a method for calculating coverage database. The method comprises:

**101:** transmitting a measurement control message to terminals in a network coverage area, wherein the measurement control message instructs a terminal supporting global position system (GPS) to include geographical position information for current position of the terminal in a measurement report to be reported.

In this step, when the measurement control message is transmitted to the terminals, there is no need to identify whether a terminal can support the GPS function. The measurement control message may be transmitted to all terminals, so as to instruct those terminals supporting global position system (GPS) to include the geographical position information for the current positions of the terminals in the measurement report to be reported. Those terminals supporting GPS will return the measurement reports including the geographical position information for the current positions of the terminals and the signal strengths, and those terminals not supporting GSP will still return the measurement report as ruled by the protocols, which includes the signal strengths but no geographical position information.

**102:** receiving the measurement reports transmitted by the terminals.

It can be understood that those terminals supporting GPS will return the measurement report including both of the geographical position information for the current positions of the terminals and the signal strengths, and those terminals not supporting GSP will still return the measurement report as ruled by the protocols, which includes the signal strengths but no geographical position information.

**103:** if the measurements report of a terminal includes the signal strengths and the geographical position information, the signal strengths of signals received from respective cells by the terminal and the geographical position information for the terminal will be stored into the coverage database.

It shall be noted that the coverage database may be an empty coverage database or a coverage database containing data before storing the signal strengths of signals received from respective cells by the terminal and the geographical position information for the terminal into the coverage database. This step stores the signal strengths of signals received from respective cells by the terminal and the geographical position information for the terminal obtained from the measurement report into the coverage database, so as to realize the calibration of the coverage database.

Furthermore, said network coverage area is divided into grids. The embodiment method further comprises: if two or more pieces of geographical position information are received from a same grid, calculating an arithmetic mean of the signal strengths associated with a certain cell corresponding to the two or more pieces of geographical position information and taking the arithmetic mean as the signal strength associated with the certain cell for the gird.

Furthermore, if there is a grid without geographical position information being reported, the method further comprises:

calculating the signal strengths for the grid without geographical position information being reported by using the signal strengths for grids with geographical position information being reported neighboring to the grid without geographical position information being reported.

In particular, the calculating the signal strengths for the grid without geographical position information being reported by using the signal strengths for grids with geographical position information being reported neighboring to the grid without geographical position information being reported comprises:

calculating the signal strengths for the grid without geographical position information being reported according to the signal strengths for a first and a second grids with geographical position information being reported, wherein the first and the second grids are located on the same straight line as the grid without geographical position information being reported, and the first and the second grids are two grids closest to the grid without geographical position information being reported.

Furthermore, the embodiment also provides an example used by the coverage database. This example may be performed after the calibration of the coverage database has been done. The method further comprises: retrieving geographical position information corresponding to the signal strengths included in the received measurement report by querying the coverage database with signal strengths included in a received measurement report, if the received measurement report includes the signal strengths but no geographical position information.

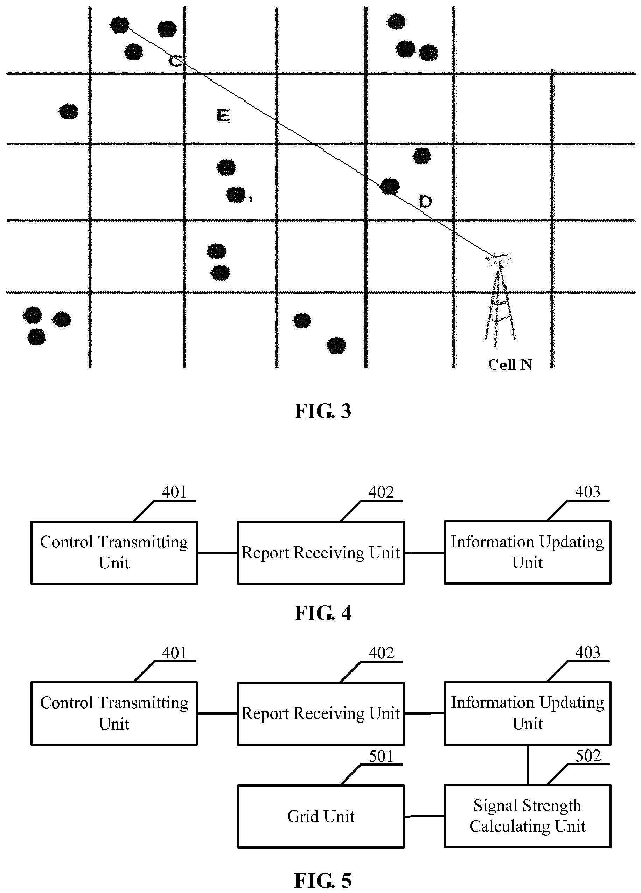

The entities performing the method embodiment may be network-side devices being able to control the terminals or base stations, such as Radio Network Controller (RNC), as illustrated by the following embodiments. It shall be noted that there is data contained in the coverage database in the following embodiments. As can be understood, it may be possible that the constructed coverage database may be an empty coverage database with no data. Furthermore, the coverage database may be a coverage database, which is constructed after the grids-dividing have been done. Referring to figure 2, which is a flow chart of a method of the embodiment, and figure 3, which is a diagram illustrating calculating the calibration of the coverage database.

201: obtaining the coverage database, in which geographical position for each point and the signal strengths of signals received from different base stations at this point are recorded. The geographical position may be represented using longitude and latitude.

A brief description for obtaining the coverage database is provided as follows. Firstly, geographical distribution of the signal strengths for each cell in the network coverage is calculated. Generally, the area being calculated is first divided into grids, i.e. dividing this area into grids of x meters by x meters. Without loss of generality, for a cell N, the distance from each grid to this cell may be first calculated. The grids, whose distances from the cell N are within y meters, are then found. This can reduce the amount of calculation. The signal strength of signal received from the cell N at each grid is calculated using well known formula for the signal strength: ReLev=a+b*log(d). The a and b in the formula are determined experimentally, taking different values for different stations, typically taking values between -105 and -35. The d is the distance from the cell N to the grid in unit of kilometer (km). After the calculations have been done for all cells using said formula, the signal strengths of signals received from respective cells at each grid have been recorded for this grid, constructing the coverage database.

In this embodiment, the whole network coverage area may be divided into a plurality of grids of x meters by x meters. For an arbitrary gird, such as gird E, it can receive signals from a plurality of cells. The signal strength of signals received from each cell at the gird E may be calculated using the formula Relev=a+b*log(d). The construction of the coverage database is to calculate the signal strengths for each grid in the area and store the results. It can be understood that the geographical position information of each gird has been determined after the grids-dividing have been done. By calculating the signal strengths for each grid, the data stored in the coverage database shall contain the geographical position information and the signal strengths for the grids.

202: Radio Network Controller (RNC) transmits a measurement control message to a terminal, and records the geographical position information and the signal strengths included in the measurement report transmitted by the terminal.

This step can comply with Third Generation Partnership Project (3GPP). If an identifier of positioning indicated in the measurement control message is Assisted Global Positioning System (AGPS), any terminal supporting GPS/AGPS may include, in the MR to be reported, the longitude and latitude of the calling position and the signal strengths of signals received from respective cells by the terminal at this point. A terminal not supporting GPS may report the signal strengths of signals received from respective cells by the terminal at this point in the MR.

It can be seen from the test that about 5% terminals operating in the network support GPS/AGPS. These terminals supporting GPS/AGPS may include geographical position information (longitude and latitude) and the signal strengths of signals received from each cells by the terminals at this point in their respective MRs, after receiving the measurement control message. These MRs will be stored for calibrating the coverage database.

It shall be noted that positioning methods indicated in the measurement control message further comprise: cell Identifier+Round Time (CELLID+RTT) or Observed Time Difference of Arrival (OTDOA). CELLID+RTT is a positioning method which evaluates distance using cell ID and the round time from a terminal to a base station, and OTDOA is a positioning method which evaluates distance by calculating the direction for transmitting signals by a terminal. Although the examples are provided above with respect to these three manners of transmitting the measurement control message, it shall be noted that there are many other manners for instructing the terminals to include the geographical position information in the MR. The particular methods for including such information will not affect the implementation of the embodiment of the present invention and thus not limit the embodiment of the present invention.

203: calibrating coverage database

Since there may be many measurement reports including geographical position information reported for one grid, or not any measurement report including geographical position information reported for one grid, a data combination may be first performed for a grid. The detailed description is provided as follows.

The geographical distribution of the MRs including longitudes and latitudes reported by the terminals is uneven geographically. From the geographical viewpoint, an area may consist of many grids. There may be more MRs including longitudes and latitudes in some girds, or less in some girds, or none in some girds. As shown in figure 3, an example is provided for the grids with MRs including geographical position information (longitude and latitude) being reported. Each black point in figure 3 represents one reported MR including geographical position information at this position. There are a plurality of MRs in grids C and D in the coverage database. There is no MR including geographical position information in the grid E. When calibrating the coverage database, a plurality of MRs in one gird may be combined using an arithmetic mean method. These data will replace the previously calculated data values in the coverage database. The details calculation is provided as follows.

For the grids with MRs including geographical position information being reported, it is needed to combine the MRs for each grid. Generally, signals received from a cell N by the terminals at respective points are different from each other. In order to differentiate the signals at respective points, the signal strength of signal received from the cell N at a point may be modeled using the formula: ReLev=a+b*log(d)+s, wherein d is the distance from this point to the cell N, s is the deviation caused by shadow fading. The a, b and d in said formula may be considered same for the points in a same grid, except that s normally follows normal distribution. As a result, the signal strengths of signals received from the cell N at all points in a grid may be combined via the arithmetic mean. After combined, there is only one set of data values for a grid which initially has one or more reported MRs including geographical position information. The set of data values represents the signal strengths of signals received from respective cells in this grid and will replace the previously calculated data values in the coverage database. There is no data value for the grids without MRs including geographical position information being reported.

The embodiments of the present invention may also perform calibration for the grids without MRs including geographical position information (longitude and latitude) being reported. Taking the grid E without MRs including geographical position information in figure 3 as an example, the grids C and D are the grids with MRs including geographical position information being reported, which are closest to the grid E on the connecting line between the grid E and the cell N. The a and b in the formula ReLev=a+b*log(d) may be calculated using the signals received from the cell N in the grids C and D, and then used to calibrate the previous calculating formula. Then the signal received from the cell N in the grid E may be derived and used to replace the previous data values in the coverage database. The details calculating process is provided as follows.

In figure 3, for the grids without MRs including geographical position information being reported, such as grid E, the data calculated in the first step using the formula ReLev=a+b*log(d) shall be calibrated via an arithmetic. Without loss of generality, taking an arbitrary connecting line directed out from the cell N as an example, there are many grids C, D and E on this line, wherein, there are MRs including geographical position information reported in the grids C and D, and none in the grid E. Then the data calculated via the formula may be utilized for this point E.

First, two grids with MRs including geographical position information being reported, which are closest to the point E on said connecting line, are determined as C and D in figure 3. The distances from the grids C and D to the cell N are calculated and labeled as d1 and d2, respectively. As mentioned above, the signal strengths of signals received from the cell N for the girds C and D have been derived by combining the reported MR and labeled as ReLev1 and ReLev2, respectively. As a result, it can be derived:

for point C:

$$ReLev1 = a' + b'\log(d1)$$

for point D:

$$ReLev2 = a' + b'\log(d2).$$

The above two simultaneous equations may be used to derive a' and b' for C and D on this connecting line from C, D to the cell N, wherein, the a' and b' are derived-by-test values, and the a and b are model-theoretic values. These values may be combined with the a and b in the experimental formula in the first step, so as to derive the parameters applicable to the point E, labeled as ae and be respectively. This combination is to derive a compromising result from the derived-by-test values a' and b' and the theoretic values, i.e. slope and intercept in the formula for the point E: ae and be. The combining formula is:

$$parameter\ ae = (K*a + L*a')/(K+L)$$

$$parameter\ be = (K*b + L*b')/(K+L)$$

wherein, K and L in the above formula is an integer.

Then, the signal strength of signal received from the cell N in the grid E may be calculated using the following formula:

$$ReLev = ae + be * \log(d3)$$

wherein, d3 is the distance from the grid E to the cell N.

Using the above mentioned method, the signal strengths from each cell are calculated for each grid without MRs including geographical position information being reported and then recorded in the coverage database to replace the previous data values. Then the calibration for all data in the coverage database is done.

The embodiments of the present invention instructs a terminal supporting GPS to include geographical position information for current position of the terminal in a measurement report to be reported by transmitting the measurement control message to the terminals in the network coverage area, and store the signal strengths of signals received from respective cells by the terminal and the geographical position information of the terminal into the coverage database. As a result, the coverage database may be calibrated. Since terminals scatter randomly in the network, the range, in which the solutions of the embodiments of the present invention are applied to perform calibration, covers all areas, in which GPS signals can be received, and thus is not limited to the roads. Additionally, there is no need for the vehicles and drive test professionals. The speed of calibration of the coverage database is improved with a lower cost and the precision of calibration data in off-road areas is also improved. Thus the positioning precision is improved, the time and cost spent on calibration are reduced, facilitating popularization and application of the positioning technology.

It can be seen from the test that, although the percentage of the terminals supporting GPS/AGPS in the network is relative small (about 5%), the test shows that such terminals are distributed widely, covering all outdoor areas such as roads, sideways, open grounds and so on. Therefore, the coverage area for data collocation performing calibration by using the embodiments of the present invention is much larger than that for drive test. Moreover, when the coverage database calibrated using such methods is applied in the MR-based positioning, the positioning precision can be boosted, up to 30 meters.

Embodiments of the present invention further provides an apparatus for calibrating the coverage database, as shown in figure 4, comprising:

> a control transmitting unit **401** for transmitting a measurement control message to terminals in a network coverage area, wherein the measurement control message is used to instruct a terminal supporting Global Position System (GPS) to include geographical position information for current position of the terminal in a measurement report to be reported;
> a report receiving unit **402** for receiving the measurement report transmitted by the terminal;
> an information updating unit **403** for storing signal strengths of signals received from respective cells by the terminal and the geographical position information for the terminal into the coverage database, if the measurement report includes the signal strengths and the geographical position information.

Furthermore, as shown in figure 5, the apparatus further comprises:

> a grid unit **501** for dividing the network coverage area into grids;
> a signal strength calculating unit **502** for, if two or more pieces of geographical position information are received from a same grid, calculating an arithmetic mean of the signal strengths associated with a certain cell corresponding to the two or more pieces of geographical position information and taking the arithmetic mean as the signal strength associated with the certain cell for the gird.

Furthermore, the signal strength calculating unit **502** is further for, if there is a grid without geographical position information being reported, calculating the signal strengths for the grid without geographical position information being reported by using the signal strengths for grids with geographical position information being reported neighboring to the grid without geographical position information being reported.

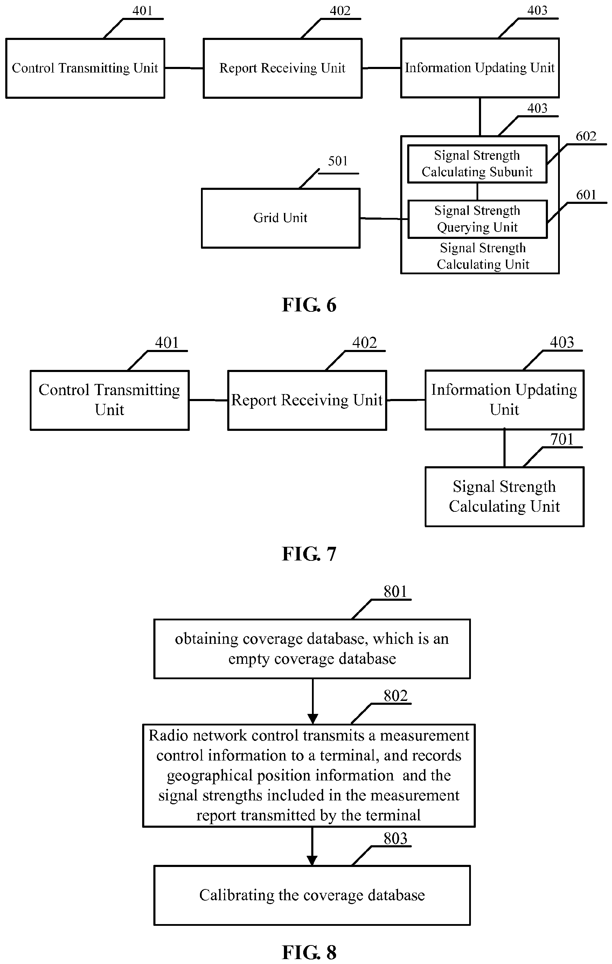

Specifically, as shown in figure 6, the signal strength calculating unit **502** comprises:

> a signal strength querying unit **601** for querying signal strengths for a first grid and a second grid with geographical position information being reported, the first and the second grids are located on the same straight line as the grid without geographical position information being reported, and wherein the first and the second grids are two grids closest to the grid without geographical position information being reported; and
> a signal strength calculating subunit **602** for calculating the signal strengths for the grid without geographical position information being reported from the signal strengths for the first and second grids.

Furthermore, as shown in figure 7, the apparatus further comprises:

geographical position querying unit **701** for querying the coverage database with signal strengths included in a received measurement report to retrieve geographical position information corresponding to the signal strengths included in the received measurement report, if the received measurement report includes the signal strengths but no geographical position information.

As mentioned in the above embodiments, the constructed coverage database may be an empty coverage database without data. The following illustration is provided by taking this as an example. Referring to figure 8, which is a flow diagram of a method according to this embodiment.

**801**: obtaining coverage database, which is an empty coverage database.

The key information in the empty coverage database is empty. For example, the empty coverage database may be a database without any records. The empty coverage database may only record geographical position for each point, but records for the signal strengths of signals received from different base stations at each point are empty, or such records are zero. The geographical position for each point may be represented using longitude and latitude.

**802**: RNC transmits a measurement control message to a terminal, and records the geographical position information and the signal strengths included in the measurement report transmitted by the terminal.

This step can comply with Third Generation Partnership Project (3GPP). If an identifier of positioning indicated in the measurement control message is Assisted Global Positioning System (AGPS), any terminal supporting GPS/AGPS may include, in the MR to be reported, the longitude and latitude of the calling position and the signal strengths of signals received from respective cells by the terminal at this point. A terminal not supporting GPS may report the signal strengths of signals received from respective cells by the terminal at this point in the MR.

It can be seen from the test that about 5% terminals operating in the network support GPS/AGPS. These terminals supporting GPS/AGPS may include geographical position information (longitude and latitude) and the signal strengths of signals received from each cell by the terminals at this point in their respective MRs, after receiving the measurement control message. These MRs will be stored for calibrating the coverage database.

It shall be noted that positioning methods indicated in the measurement control message further comprise: cell Identifier+Round Time (CELLID+RTT) or Observed Time Difference of Arrival (OTDOA). CELLID+RTT is a positioning method which evaluates distance using cell ID and the round time from a terminal to a base station, and OTDOA is a positioning method which evaluates distance by calculating the direction for transmitting signals by a terminal. Although the examples are provided above with respect to these three manners of transmitting the measurement control message, it shall be noted that there are many other manners for instructing the terminals to include the geographical position information in the MR. The particular methods for including such information will not affect the implementation of the embodiment of the present invention and thus not limit the embodiment of the present invention.

803: calibrating coverage database
Since there may be many measurement reports including geographical position information reported for one grid, or not any measurement report including geographical position information reported for one grid, a data combination may be first performed for a grid. The detailed description is provided as follows.

The geographical distribution of the MRs including longitudes and latitudes reported by the terminals is uneven geographically. From the geographical viewpoint, an area may consist of many grids. There may be more MRs including longitudes and latitudes in some girds, or less in some girds, or none in some girds. Still referring to figure 3, the grids with MRs including geographical position information (longitudes and latitudes) being reported are illustrated. Each black point in figure 3 represents one reported MR including geographical position information at this position. There are a plurality of MRs in grids C and D in the coverage database. There is no MR including geographical position information in the grid E. When calibrating the coverage database, a plurality of MRs in one gird may be combined using an arithmetic mean method. These data will replace the previously calculated data values in the coverage database. After combined, there is only one set of data values for a grid which initially has one or more reported MRs including geographical position information. The set of data values represents the signal strengths of signals received from respective cells in this grid and will replace the previously calculated data values in the coverage database. There is no data value for the grids without MRs including geographical position information being reported.

An embodiment of the present invention may not perform calibration for the grids without MRs including geographical position information (longitude and latitude) being reported. This step of the embodiment of the present invention may be construed as a special case for step 803: those grids without MRs including geographical position information being reported may be considered as positions where the possibility of terminal users appearing is small, and thus these positions will be omitted from the calculation.

By applying the above mentioned method, the coverage database may be constructed accurately using the position information and the signal strengths from respective cells for the grids with reported MRs including geographical position information being reported.

The embodiments of the present invention instructs a terminal supporting GPS to include geographical position information for current position of the terminal in a measurement report to be reported by transmitting the measurement control message to the terminal in the network coverage area, and store the signal strengths of signals received from respective cells by the terminal and the geographical position information of the terminal into the coverage database. As a result, the coverage database may be calibrated. Since terminals scatter randomly in the network, the range, in which the solutions of the embodiments of the present invention are applied to perform calibration, covers all areas, in which GPS signals can be received, and thus is not limited to the roads. Additionally, there is no need for the vehicles and drive test professionals. The speed of calibration of the coverage database is improved with a lower cost and the precision of calibration data in off-road areas is also improved. Thus the positioning precision is improved, the time and cost spent on calibration are reduced, facilitating popularization and application of the positioning technology.

It shall be noted that the respective units involved in the above user device and base station embodiments are divided logically according to their functions. The present invention shall be not limited to such division, as long as the respective functions can be realized. Additionally, the special names for the respective function units are only used to distinguish from each other and do not limit the protection scope of the present invention.

Furthermore, it can be understood for those skilled in the art that all or a part of the steps in the above respective method embodiments may be implemented by a program instructing the associated hardware. The associated program may be stored on a computer-readable storage medium. Said storage medium may be Read Only Memory, disk or disc, etc.

The previous description is provided as preferable embodiments of the present invention, and does not intend to limit the protection scope of the present invention. Those changes and replacements easily thought by those skilled in the art without departing from the technical scopes of the disclosure of the embodiments of the present invention shall be fall into the protection scope of the present invention. Thus the protection scope of the present invention shall be defined by the attached claims.

**Claims**

1. A method for calibrating a coverage database, which records positions of points within a network coverage area of a cellular network and signal strengths of signals received from different cells at each point of the points, comprising:

   transmitting (SI01) a measurement control message to one or more terminals in the network coverage area, wherein the measurement control message is used to instruct a terminal supporting Global Position System, GPS, to include geographical position information of current position of the terminal in a measurement report to be reported;
   receiving (S102) the measurement report transmitted by the terminal;
   storing (S103) signal strengths of signals received from respective cells by the terminal and the geographical position information of the terminal into the coverage database, if the measurement report include the signal strengths and the geographical position information;
   wherein the network coverage area is divided into grids, the coverage database stores the geographical position information and the signal strengths for the grids; and the method further comprises:
   if two or more pieces of geographical position information are received from a same grid, calculating arithmetic mean of the signal strengths associated with a certain cell corresponding to the two or more pieces of geographical position information and taking the arithmetic mean as the signal strength associated with the certain cell for the grid.

2. The method according to claim 1, wherein if there is a grid without geographical position information being reported, the method further comprises:
   calculating signal strengths for the grid without geographical position information being reported according to the signal strengths for grids with geographical position information being reported neighboring to the grid without geographical position information being reported.

3. The method according to claim 2, wherein the calculating the signal strengths for the grid without geographical position information being reported according to the signal strengths for grids with geographical position information being reported neighboring to the grid without geographical position information being reported comprises:
   calculating the signal strengths for the grid without geographical position information being reported according to signal strengths of a first and a second grids with geographical position information being reported, wherein the first and the second grids are located on the same straight line as the grid without geographical position information being reported, and the first and the second grids are two grids closest to the grid without geographical position information being reported.

4. The method according to any one of claims 1-3, further comprising:
   retrieving geographical position information corresponding to the signal strengths included in the received measurement report by querying the coverage database with signal strengths included in the received measurement report, if the received measurement report includes the signal strengths but no geographical position information.

5. The method according to any one of claims 1-4, wherein the coverage database is an empty coverage database or a coverage database containing data, before storing the signal strengths of signals received from respective cells by the terminal and the geographical position information of the terminal into the coverage database.

6. An apparatus for calibrating a coverage database, which records positions of points within a network coverage area of a cellular network and signal strengths of signals received from different cells at each point of the points, comprising:

   a control transmitting unit (401) for transmitting a measurement control message to one or more terminals in the network coverage area, wherein the measurement control message is used to instruct a terminal supporting Global Position System, GPS, to include geographical position information of current position of the terminal in a measurement report to be reported;
   a report receiving unit (402) for receiving the measurement report transmitted by the terminal;

an information updating unit (403) for storing signal strengths of signals received from respective cells by the terminal and the geographical position information of the terminal into the coverage database, if the measurement report comprises the signal strengths and the geographical position information;
a grid unit (501) for dividing the network coverage area into grids; wherein the coverage database stores the geographical position information and the signal strengths for the grids; and
a signal strength calculating unit (502) for, if two or more pieces of geographical position information are received from a same grid, calculating arithmetic mean of the signal strengths associated with a certain cell corresponding to the two or more pieces of geographical position information and taking the arithmetic mean as the signal strength associated with the certain cell for the grid.

7. The apparatus according to claim 6, wherein the signal strength calculating unit (502) is further for, if there is a grid without geographical position information being reported, calculating signal strengths for the grid without geographical position information being reported according to the signal strengths for grids with geographical position information being reported neighboring to the grid without geographical position information being reported.

8. The apparatus according to claim 7, wherein the signal strength calculating unit comprises:

a signal strength querying unit (601) for querying signal strengths for a first and a second grids with geographical position information being reported, wherein the first and the second grids are located on the same straight line as the grid without geographical position information being reported, and wherein the first and the second grids are two grids closest to the grid without geographical position information being reported; and
signal strength calculating subunit (602) for calculating the signal strengths for the grid without geographical position information being reported according to the signal strengths of the first and the second grids.

9. The apparatus according to any one of claims 6-8, further comprising:
geographical position querying unit for querying the coverage database with signal strengths included in the received measurement report to retrieve geographical position information corresponding to the signal strengths included in the received measurement report, if the received measurement report includes the signal strengths but no geographical position information.

**Patentansprüche**

1. Verfahren zum Kalibrieren einer Abdeckungsdatenbank, die Positionen von Punkten in einem Netzabdeckungsbereich eines zellulären Netzes und Signalstärken von Signalen, die von verschiedenen Zellen an jedem Punkt der Punkte empfangen werden, aufzeichnet, umfassend:

Senden (S101) einer Messsteuerungsnachricht an ein oder mehrere Endgeräte in dem Netzabdeckungsbereich, wobei die Messsteuerungsnachricht verwendet wird, um ein Endgerät, welches das globale Positionssystem, GPS unterstützt, anzuweisen, eine geographische Positionsinformation der aktuellen Position des Endgeräts in einen zu meldenden Messbericht aufzunehmen;
Empfangen (S102) des durch das Endgerät gesendeten Messberichts;
Speichern (S103) von Signalstärken der Signale, die durch das Endgerät von den jeweiligen Zellen empfangen wurden, und der geographischen Positionsinformation des Endgeräts in der Abdeckungsdatenbank, wenn der Messbericht die Signalstärken und die geographische Positionsinformation enthält;
wobei der Netzabdeckungsbereich in Gitterzellen unterteilt wird, wobei die Abdeckungsdatenbank die geographische Positionsinformation und die Signalstärken für die Gitterzellen speichert; und wobei das Verfahren ferner umfasst:
wenn zwei oder mehr geographische Positionsinformationselemente von einer gleichen Gitterzelle empfangen werden, Berechnen des arithmetischen Mittelwerts der Signalstärken, die mit einer bestimmten Zelle assoziiert sind, die den zwei oder mehr geographischen Positionsinformationselementen entspricht, und Nehmen des arithmetischen Mittelwerts als mit der bestimmten Zelle assoziierten Signalstärke für die Gitterzelle.

2. Verfahren nach Anspruch 1, wobei, wenn eine Gitterzelle ohne gemeldete geographische Positionsinformation vorhanden ist, das Verfahren ferner umfasst:
Berechnen von Signalstärken für die Gitterzelle ohne gemeldete geographische Positionsinformation gemäß den Signalstärken für Gitterzellen mit gemeldeter geographischen Positionsinformation, die benachbart zu der Gitterzelle ohne gemeldete geographische Positionsinformation sind.

3. Verfahren nach Anspruch 2, wobei das Berechnen der Signalstärken für die Gitterzelle ohne gemeldete geographische Positionsinformation gemäß den Signalstärken für Gitterzellen mit gemeldeter geographischer Positionsinformation, die benachbart zu der Gitterzelle ohne gemeldete geographische Positionsinformation sind, umfasst:

Berechnen der Signalstärken für die Gitterzelle ohne gemeldete geographische Positionsinformation gemäß Signalstärken einer ersten und einer zweiten Gitterzelle mit gemeldeter geographischer Positionsinformation, wobei die ersten und die zweiten Gitterzellen auf der gleichen geraden Linie wie die Gitterzelle ohne gemeldete geographische Positionsinformation angeordnet sind, und wobei die ersten und die zweiten Gitterzellen zwei Gitterzellen sind, die sich am nächsten zu der Gitterzelle ohne gemeldete geographische Positionsinformation befinden.

4. Verfahren nach einem der Ansprüche 1 bis 3, ferner umfassend:

Abrufen einer geographischen Positionsinformation, die den in dem empfangenen Messbericht enthaltenen Signalstärken entspricht, durch Abfragen der Abdeckungsdatenbank mit den in dem empfangenen Messbericht enthaltenen Signalstärken, wenn der empfangene Messbericht die Signalstärken, aber keine geographische Positionsinformation enthält.

5. Verfahren nach einem der Ansprüche 1 bis 4, wobei die Abdeckungsdatenbank eine leere Abdeckungsdatenbank oder eine Daten enthaltende Abdeckungsdatenbank ist, bevor die Signalstärken der Signale, die von jeweiligen Zellen durch das Endgerät empfangen werden, und die geographische Positionsinformation des Endgeräts in der Abdeckungsdatenbank gespeichert werden.

6. Vorrichtung zum Kalibrieren einer Abdeckungsdatenbank, die Positionen von Punkten in einem Netzabdeckungsbereich eines zellulären Netzes und Signalstärken von Signalen, die von verschiedenen Zellen an jedem Punkt der Punkte empfangen werden, aufzeichnet, umfassend:

eine Steuerungssendeeinheit (401) zum Senden einer Messsteuerungsnachricht an ein oder mehrere Endgeräte in dem Netzabdeckungsbereich, wobei die Messsteuerungsnachricht verwendet wird, um ein Endgerät, welches das globale Positionssystem, GPS unterstützt, anzuweisen, eine geographische Positionsinformation der aktuellen Position des Endgeräts in einen zu meldenden Messbericht aufzunehmen;
eine Berichtempfangseinheit (402) zum Empfangen des durch das Endgerät gesendeten Messberichts;

eine Informationsaktualisierungseinheit (403) zum Speichern von Signalstärken der Signale, die durch das Endgerät von den jeweiligen Zellen empfangen wurden, und der geographischen Positionsinformation des Endgeräts in der Abdeckungsdatenbank, wenn der Messbericht die Signalstärken und die geographische Positionsinformation enthält;
eine Gitterzelleneinheit (501) zum Unterteilen des Netzabdeckungsbereichs in Gitterzellen; wobei die Abdeckungsdatenbank die geographische Positionsinformation und die Signalstärken für die Gitterzellen speichert; und
eine Signalstärkenberechnungseinheit (502) zum Berechnen, wenn zwei oder mehr geographische Positionsinformationselemente von einer gleichen Gitterzelle empfangen werden, des arithmetischen Mittelwerts der Signalstärken, die mit einer bestimmten Zelle assoziiert sind, die den zwei oder mehr geographischen Positionsinformationselementen entspricht, und zum Nehmen des arithmetischen Mittelwerts als mit der bestimmten Zelle assoziierten Signalstärke für die Gitterzelle.

7. Vorrichtung nach Anspruch 6, wobei die Signalstärkenberechnungseinheit (502) ferner dazu dient, wenn eine Gitterzelle ohne gemeldete geographische Positionsinformation vorhanden ist, Signalstärken für die Gitterzelle ohne gemeldete geographische Positionsinformation gemäß den Signalstärken für Gitterzellen mit gemeldeter geographischen Positionsinformation, die benachbart zu der Gitterzelle ohne gemeldete geographische Positionsinformation sind, zu berechnen.

8. Vorrichtung nach Anspruch 7, wobei die Signalstärkenberechnungseinheit umfasst:

eine Signalstärkenabfrageeinheit (601) zum Abfragen von Signalstärken für eine erste und eine zweite Gitterzelle mit gemeldeter geographischer Positionsinformation, wobei die ersten und die zweiten Gitterzellen auf der gleichen geraden Linie wie die Gitterzelle ohne gemeldete geographische Positionsinformation angeordnet sind, und wobei die ersten und die zweiten Gitterzellen zwei Gitterzellen sind, die sich am nächsten zu der Gitterzelle ohne gemeldete geographische Positionsinformation befinden; und
eine Signalstärkenberechnungs-Untereinheit (602) zum Berechnen der Signalstärken für die Gitterzelle ohne gemeldete geographische Positionsinformation gemäß den Signalstärken der ersten und der zweiten Gitterzellen.

9. Vorrichtung nach einem der Ansprüche 6 bis 8, ferner umfassend:

eine Einheit zur Abfrage der geographischen Position zum Abfragen der Abdeckungsdatenbank mit in dem empfangenen Messbericht enthaltenen Signalstärken, um eine geographische Positionsinformation abzurufen, die den in dem empfangenen Messbericht enthaltenen Signalstärken entspricht, wenn der empfangene Messbericht die Signalstärken, aber keine geographische Positionsinformation enthält.

**Revendications**

1. Procédé pour étalonner une base de données de couverture, qui enregistre des positions de points à l'intérieur d'une zone de couverture de réseau d'un réseau cellulaire et des intensités de signal de signaux reçus de différentes cellules à chaque point des points, consistant :

   à transmettre (S101) un message de commande de mesure à un ou plusieurs terminaux dans la zone de couverture de réseau, dans lequel le message de commande de mesure est utilisé pour donner comme instruction à un terminal prenant en charge le système mondial de positionnement (GPS) d'inclure des informations de localisation géographique d'une position actuelle du terminal dans un rapport de mesure qui doit être renvoyé ;
   à recevoir (S102) le rapport de mesure transmis par le terminal ;
   à stocker (S103) des intensités de signal de signaux reçus de cellules respectives par le terminal et les informations de position géographique du terminal dans la base de données de couverture si le rapport de mesure comprend les intensités de signal et les informations de position géographique ;
   dans lequel la zone de couverture de réseau est divisée en grilles, la base de données de couverture stocke les informations de position géographique et les intensités de signal pour les grilles ; et le procédé consiste en outre :
   si au moins deux éléments d'informations de position géographique sont reçus d'une même grille, à calculer une moyenne arithmétique des intensités de signal associées à une certaine cellule correspondant aux deux, ou plus, éléments d'informations de position géographique et à prendre la moyenne arithmétique en tant qu'intensité de signal associée à la certaine cellule pour la grille.

2. Procédé selon la revendication 1, dans lequel, s'il y a une grille sans compte rendu d'informations de position géographique, le procédé consiste en outre :
   à calculer des intensités de signal pour la grille sans compte rendu d'informations de position géographique en fonction des intensités de signal pour des grilles ayant un compte rendu d'informations de position géographiques voisines de la grille sans compte rendu d'informations de position géographique.

3. Procédé selon la revendication 2, dans lequel le calcul des intensités de signal pour la grille sans compte rendu d'informations de position géographique en fonction des intensités de signal pour des grilles ayant un compte rendu d'informations de position géographiques voisines de la grille sans compte rendu d'informations de position géographique consiste :
   à calculer les intensités de signal pour la grille sans compte rendu d'informations de position géographique en fonction d'intensités de signal pour une première et une seconde grille ayant un compte rendu d'informations de position géographique, dans lequel la première et la seconde grille sont situées sur la même ligne droite que la grille sans compte rendu d'informations de position géographique et la première et la seconde grille sont les deux grilles les plus proches de la grille sans compte rendu d'informations de position géographique.

4. Procédé selon l'une quelconque des revendications 1 à 3, consistant en outre :
   à récupérer des informations de position géographique correspondant aux intensités de signal incluses dans le rapport de mesure reçu en interrogeant la base de données de couverture ayant des intensités de signal incluses dans le rapport de mesure reçu si le rapport de mesure reçu comprend les intensités de signal mais pas d'informations de position géographique.

5. Procédé selon l'une quelconque des revendications 1 à 4, dans lequel la base de données de couverture est une base de données de couverture vide ou une base de données de couverture contenant des données, avant de stocker les intensités de signal de signaux reçus de cellules respectives par le terminal et les informations de position géographique du terminal dans la base de données de couverture.

6. Appareil pour étalonner une base de données de couverture, qui enregistre des positions de points à l'intérieur d'une zone de couverture de réseau d'un réseau cellulaire et des intensités de signal de signaux reçus de différentes cellules à chaque point des points, comprenant :

   une unité de transmission de commande (401) pour transmettre un message de commande de mesure à un ou plusieurs terminaux dans la zone de couverture de réseau, dans lequel le message de commande de mesure est utilisé pour donner comme instruction à un terminal prenant en charge le système mondial de positionnement (GPS) d'inclure des informations de localisation géographique d'une position actuelle du terminal dans un rapport de mesure qui doit être renvoyé ;

une unité de réception de rapport (402) pour recevoir le rapport de mesure transmis par le terminal ;

une unité de mise à jour d'informations (403) pour stocker des intensités de signal de signaux reçus de cellules respectives par le terminal et les informations de position géographique du terminal dans la base de données de couverture si le rapport de mesure comprend les intensités de signal et les informations de position géographique ;

une unité de grille (501) pour diviser la zone de couverture de réseau en grilles ; dans lequel la base de données de couverture stocke les informations de position géographique et les intensités de signal pour les grilles ; et

une unité de calcul d'intensité de signal (502) pour calculer, si au moins deux éléments d'informations de position géographique sont reçus d'une même grille, une moyenne arithmétique des intensités de signal associées à une certaine cellule correspondant aux deux, ou plus, éléments d'informations de position géographique et pour prendre la moyenne arithmétique en tant qu'intensité de signal associée à la certaine cellule pour la grille.

7. Appareil selon la revendication 6, dans lequel l'unité de calcul d'intensité de signal (502) est en outre destinée, s'il y a une grille sans compte rendu d'informations de position géographique, à calculer des intensités de signal pour la grille sans compte rendu d'informations de position géographique en fonction des intensités de signal pour des grilles ayant un compte rendu d'informations de position géographique voisines de la grille sans compte rendu d'informations de position géographique.

8. Appareil selon la revendication 7, dans lequel l'unité de calcul d'intensité de signal comprend :

une unité d'interrogation d'intensité de signal (601) pour interroger des intensités de signal pour une première et une seconde grille ayant un compte rendu d'informations de position géographique, dans lequel la première et la seconde grille sont situées sur la même ligne droite que la grille sans compte rendu d'informations de position géographique et dans lequel la première et la seconde grille sont les deux grilles les plus proches de la grille sans compte rendu d'informations de position géographique ; et

une sous-unité de calcul d'intensité de signal (602) pour calculer les intensités de signal pour la grille sans compte rendu d'informations de position géographique en fonction des intensités de signal de la première et de la seconde grille.

9. Appareil selon l'une quelconque des revendications 6 à 8, comprenant en outre :
une unité d'interrogation de position géographique pour interroger la base de données de couverture ayant des intensités de signal incluses dans le rapport de mesure reçu pour récupérer des informations de position géographique correspondant aux intensités de signal incluses dans le rapport de mesure reçu si le rapport de mesure reçu comprend les intensités de signal mais pas d'informations de position géographique.

101

Transmitting a measurement control message to terminals in a network coverage area

102

Receiving the measurement report transmitted by a terminal

103

Storing signal strengths of the signals received from respective cells by the terminal and the geographical position information for the terminal into the coverage database, if the measurement report includes the signal strengths and the geographical position information

**FIG. 1**

201

Obtaining the coverage database

202

Radio network controller transmits a measurement control message to a terminal and records geographical position information and signal strengths included in measurement report transmitted by the terminal

203

Calibrating the coverage database

**FIG. 2**

**FIG. 3**

401                          402                          403

| Control Transmitting Unit | Report Receiving Unit | Information Updating Unit |

**FIG. 4**

401                          402                          403

| Control Transmitting Unit | Report Receiving Unit | Information Updating Unit |

501                          502

| Grid Unit | Signal Strength Calculating Unit |

**FIG. 5**

401
Control Transmitting Unit

402
Report Receiving Unit

403
Information Updating Unit

403
Signal Strength
Calculating Subunit

602

501
Grid Unit

Signal Strength
Querying Unit

601

Signal Strength
Calculating Unit

**FIG. 6**

401
Control Transmitting
Unit

402
Report Receiving Unit

403
Information Updating
Unit

701
Signal Strength
Calculating Unit

**FIG. 7**

801
obtaining coverage database, which is an
empty coverage database

802
Radio network control transmits a measurement
control information to a terminal, and records
geographical position information and the
signal strengths included in the measurement
report transmitted by the terminal

803
Calibrating the coverage database

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011176523 A1
- US 2010309051 A1
- GB 2405292 A
- US 2011165892 A1
- WO 0215417 A2
- EP 1359714 A2